(19) Europäisches Patentamt
European Patent Office
Office européen des brevets

(11) Veröffentlichungsnummer: **0 407 799 B1**

# (12) EUROPÄISCHE PATENTSCHRIFT

(45) Veröffentlichungstag der Patentschrift: **10.08.94**

(51) Int. Cl.$^5$: **C08F 283/12**, D06M 15/643

(21) Anmeldenummer: **90112081.6**

(22) Anmeldetag: **26.06.90**

Die Akte enthält technische Angaben, die nach dem Eingang der Anmeldung eingereicht wurden und die nicht in dieser Patentschrift enthalten sind.

## (54) Mittel zur Verfestigung von textilen Gebilden.

(30) Priorität: **08.07.89 DE 3922521**

(43) Veröffentlichungstag der Anmeldung:
**16.01.91 Patentblatt 91/03**

(45) Bekanntmachung des Hinweises auf die Patenterteilung:
**10.08.94 Patentblatt 94/32**

(84) Benannte Vertragsstaaten:
**BE DE FR GB IT NL**

(56) Entgegenhaltungen:
**EP-A- 0 217 257**
**BE-A- 691 718**
**DE-A- 2 717 227**
**US-A- 4 579 636**

(73) Patentinhaber: **BAYER AG**

**D-51368 Leverkusen (DE)**

(72) Erfinder: **Matner, Martin, Dr.**
**Dorfstrasse 14**
**D-5068 Odenthal (DE)**
Erfinder: **Resz, Raoul, Dr.**
**Buchenkampsweg 10**
**D-5060 Bergisch Gladbach 1 (DE)**
Erfinder: **Alberts, Heinrich, Dr.**
**Schulstrasse 1a**
**D-5068 Odenthal (DE)**
Erfinder: **Damrath, Volker, Dr.**
**Dierath 26**
**D-5093 Burscheid (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Bindemittel auf Basis von Latices von Pfropfcopolymeren spezieller Vinylmonomere oder ihrer Gemische auf Mercaptogruppen enthaltende Polyorganosiloxane bzw. deren Verwendung als hochwertige temperatur-, oxidations- und lösungsmittelbeständige Bindemittel.

Bei einer Bewertung der als Binder üblicherweise eingesetzten Butadien-Copolymeremulsionen muß auf die Temperatur- und Oxidationsstabilität dieser Copolymeren hingewiesen werden. Eine Verwendung dieser Produkte für Einsätze, die hohe Elastizität auch im Dauergebrauch bei hohen Temperaturen erfordern, sind Butadienbinder nicht geeignet. Acrylatcopolymerisate weisen bekanntlich hervorragende Alterungseigenschaften auf, leider ist ihre Tieftemperaturflexibilität bei hohen Füllstoffgehalten unzureichend, ferner ist ihre Verwendung im Dauereinsatz bei Temperaturen zwischen 150-200 °C nur sehr eingeschränkt möglich.

Aus diesen Erläuterungen zum Stand der Technik geht hervor, daß ein dringender Bedarf nach Bindemitteln besteht, die neben guten mechanischen und elastomeren Eigenschaften bei tiefen Temperaturen auch eine gute Hochtemperatur- und Oxidationsbeständigkeit aufweisen, so daß ein Einsatz der Produkte auch noch im Bereich von 150 bis 200 °C möglich und technisch sinnvoll ist. Eine weitere, zusätzliche, wichtige Anforderung an derartige Produkte ist eine gute Beständigkeit gegen organische Lösungsmittel und insbesondere gegen Kohlenwasserstoffe, wie z.B. gegen Treibstoffe oder Öle.

Latices von Pfropfcopolymeren des Styrols, Acrylnitrils, Methylmethacrylates, Acryl- und Methacrylsäure sowie ihrer Ester auf Mercaptogruppen enthaltende Polyorganosiloxane sind aus der Literatur bereits bekannt. So beschreibt die US-PS 3 575 910 im Beispiel 17 die Herstellung von Mercaptogruppen enthaltenden PolyorganosiloxanLatices und ihr Bepfropfen mit einem Gemisch aus Ethylacrylat, Methylmethacrylat, Methacrylsäure und Acrylsäure. In diesem Fall wurde der Latex eines aus ca. 60,3 Gew.-% $(CH_3)_2SiO$-, 39,6 Gew.-% $C_6H_5SiO_{3/2}$- und 0,15 Gew.-% HS-$(CH_2)_3SiO_{3/2}$-Einheiten bestehenden Polyorganosiloxans mit einem aus den oben angegebenen Monomeren gebildeten Gemisch bepfropft. Das entstandene Pfropfpolymer enthielt ca. 31 Gew.-% Polyorganosiloxan, ca. 43 Gew.-% Ethylacrylat, ca. 25 Gew.-% Methylmethacrylat und zusammen ca. 1 Gew.-% Acryl- und Methacrylsäure. Die Pfropfcopolymere dieser Art wurden als Anstrichmaterialien bzw. als Beschichtungen für Konstruktionsmaterialien vorgeschlagen.

In der US-PS 3 532 729 wird u.a. die Herstellung von Pfropfcopolymeren von Vinylmonomeren auf Mercaptogruppen enthaltende Polyorganosiloxane, welche mindestens 1 Gew.-% der Einheiten

$$Q_x\text{-S-A-SiO}_{\frac{3-n}{2}}$$

worin

- A ein Alkylen- oder Arylenradikal,
- $Q_x$ eine Vinylpolymerkette,
- x eine ganze Zahl größer als 1,
- R″ ein Methyl- oder Phenylrest und
- n eine ganze Zahl von 0 bis 2

einpolymerisiert enthalten. Als Vinylmonomere kommen hierbei alle polymerisierbare Doppelbindungen enthaltenden Verbindungen wie z.B. Butadien, Chloropren, Styrol, Acrylnitril, Methylmethacrylat, Ethylacrylat und Vinylacetat in Betracht. Die Pfropfcopolymere sollten als Komponenten für Anstrichfarben, als Additive zur Verbesserung der Thermostabilitat von Polymerkomposits, als Textilausrüstungsmaterial und in Kombination mit Styrol als Pfropfmonomere zur Herstellung von Spritzgussmassen verwendet werden.

Die DE-OS 2 717 227 beschreibt die Herstellung von Pfropfcopolymeren des Styrols, des Methylmethacrylates und des Gemisches von Styrol und Acrylnitril auf Mercaptogruppen enthaltende Polyorganosiloxane-Latices, dessen Polyorganosiloxan-Anteil zu 90 bis 99,7 Mol-% aus Dimethylsiloxan-Einheiten und zu 0,3 bis 10 Mol-% aus Mercaptogruppen enthaltenden Organosiloxan-Einheiten besteht. Das Verfahren dient zur Verbesserung der Schlagzähigkeit von thermoplastischen Vinylpolymeren. Um eine hierzu erforderliche Vernetzung der Latexteilchen zu erzielen, werden tri- und/oder tetrafunktionelle Siloxane bei der Aequilibrierungsreaktion eingebaut. Der Einsatz derartiger, vernetzend wirkender Siloxan-Einheiten stellt eines der wesentlichen Merkmale des beschriebenen Verfahrens dar. Es wird aus diesem Grunde in den Anwendungsbeispielen entweder Mercaptopropylentrimethoxysilan oder cyclisches Mercaptopropyl-methyl-siloxan in Kombination mit Ethylorthosilikat eingesetzt. Ein weiteres, wesentliches Merkmal des Verfahrens ist der 1 bis 40 Gew.-% betragende Polyorganosiloxangehalt der Pfropfpolymeren.

In keinem der angeführten Dokumente wird vorgeschlagen oder nahegelegt, daß Pfropfcopolymere von Mercaptogruppen enthaltenden Polyorganosiloxane mit bestimmter, spezieller Zusammensetzung als Bindemittel mit vorzüglichen Eigenschaften für textile Gebilde geeignet sind. Die Aufgabe der Erfindung ist die Bereitstellung von hochwertigen, dauerelastischen Bindemitteln dieser Art mit bisher auf Vinylpolymerbasis nicht erreichten, guten gummitechnischen Eigenschaften, mit ausgezeichneten Hochtemperaturbeständigkeit und auch mit guter Lösungsmittelbeständigkeit.

Es wurde nun gefunden, daß man Bindemittel für textile Gebilde mit hoher Temperatur und Oxydationsbeständigkeit und mit guten elastomeren Eigenschaften erhalten kann, wenn man dazu Pfropfcopolymer-Latices von Vinylmonomeren auf Polyorganosiloxane verwendet, welche im Pfropfcopolymer im eingebauten Zustand enthalten

1. als Pfropfsubstrat 40 bis 70 Gew.-%, vorzugsweise 50 bis 65 Gew.-%, eines mit Hydroxylgruppen endgestoppten Polyorganosiloxans der allgemeinen Formel

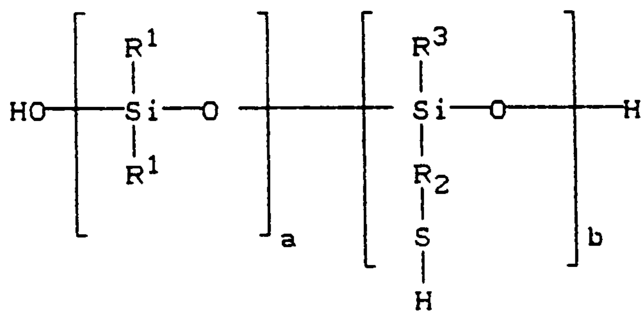

wobei

| | |
|---|---|
| $R^1$ | Alkylreste mit 1 bis 24 C-Atomen oder Arylreste mit 6 bis 10 C-Atomen, |
| $R^2$ | unverzweigte oder verzweigte zweiwertige Alkylreste mit 1 bis 8 C-Atomen, |
| $R^3$ | Alkylreste mit 1 bis 24 C-Atomen oder Arylreste bedeutet, |
| $R^2$ und $R^3$ | zusammen mit dem Silicon-Atom einen 5- oder 6-gliedrigen Ring mit einem dreiwertigen unverzweigten oder verzweigten Alkylrest mit 4 bis 8 C-Atomen bilden können und |
| a | 80 bis 99 Mol-%, vorzugsweise 90 bis 97 Mol-%, |
| b | 1 bis 20 Mol-%, vorzugsweise 3 bis 10 Mol-% |

beträgt, wobei

$a + b$ 100 Mol-% ergibt,

und die bei 25 °C gemessene Viskosität des Polymers zwischen 100 und 100.000 mPa.s liegt,

2. als aufgepropftes Vinylpolymer 30 bis 60 Gew.-%, vorzugsweise 35 bis 50 Gew.-%, Styrol und/oder $\alpha$-Methylstyrol, (Meth)Acrylsäureester, (Meth)Acrylnitril bzw. Gemische dieser Monomeren, und gegebenenfalls ein oder mehrere Vinylmonomere der allgemeinen Formel

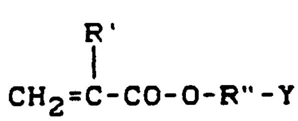 oder 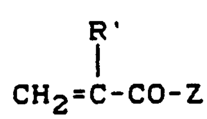

wobei

| | |
|---|---|
| R′ | für ein H-Atom oder für eine Methylgruppe, |
| R″ | für eine unverzweigte oder verzweigte Alkylgruppe mit 1 bis 18 C-Atomen, |
| Y | für ein H-Atom oder für die Gruppen -OH, -OR und |
| Z | für eine OH- oder |

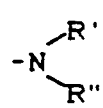 oder 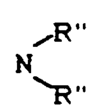

-Gruppe steht.

Die aus den erfindungsgemäß hergestellten Latices durch Vergießen und Trocknen hergestellten Filme bzw. Beschichtungen haben im Gegensatz zu den bekannten tri-und tetrafunktionelle Siloxan-Einheiten enthaltenden Pfropfcopolymeren die Eigenschaft, nach der unter Luftausschluß verlaufenden Pfropfung noch weitgehend unvernetzt, d.h. in zahlreichen organischen Lösungsmitteln noch gut löslich und daher gut filmbildend zu sein. Diese unvernetzten Filme besitzen allerdings noch eine sehr weiche, häufig klebrige Beschaffenheit und zeigen eine sehr niedrige Zugfestigkeit. Erst nach Erhitzen auf Temperaturen oberhalb 100 °C bis 250 °C an der Luft tritt ein rascher Anstieg der Zugfestigkeit von ca. 1 mPa.s bis zu ca. 5 bis 15 mPa.s ein. Gleichzeitig erlangen die Filme ein gummielastisches Verhalten, d.h. eine weitgehend reversible Dehnung von ca. 100 bis 500 %, eine für die Anwendung als Bindemittel wichtige Eigenschaft. Durch das Erhitzen tritt auch ohne Zusätze eine Vernetzung d.h. eine Selbstvulkanisation ein. Der Mechanismus der Vernetzung ist nicht mit Sicherheit bekannt, eine naheliegende Erklärung dürfte jedoch die oxidativ hervorgerufene Brückenbildung über die durch die Pfropfreaktion nicht vollständig in Anspruch genommenen Mercaptogruppen unter Ausbildung von -S-S-Bindungen sein. Die Höhe des Mercaptogruppengehaltes im als Pfropfgrundlage dienenden Polyorganosiloxan-Anteil hat auf die optischen, mechanischen und sonstigen anwendungstechnischen Eigenschaften der Pfropfcopolymeren einen gravierenden Einfluß. Weniger als 1 Mol-% der Mercaptogruppen enthaltenden Organosiloxan-Einheit reicht nicht dazu aus, einen für die Anwendung ausreichenden Pfropfungsgrad zu ermöglichen und bei der anschließenden Vulkanisation eine für die Anwendung ausreichende Vernetzungsdichte zu gewährleisten. Ein höherer Gehalt an den Mercaptogruppen enthaltenden Organosiloxan-Einheiten als 20 Mol.-% ist zwar möglich aber für die Mehrzahl der Anwendungsfälle nicht erforderlich.

Die Herstellung der Latices der Mercaptogruppen enthaltenden Polyorganosiloxane erfolgt nach bekannten Verfahren durch Aequilibrierung der Gemische von linearen oder cyclischen Polyorganosiloxanen, wie z.B. von Octaalkyl-cyclotetrasiloxan, mit entsprechenden Mercaptoalkyl-alkylcyclotetrasiloxanen oder mit Mercaptoalkylalkyl-dialkoxysilanen in Gegenwart von sauren oder alkalischen Aequilibrierungskatalysatoren. Als solche sind u.a. die aus US-PS 2 891 920 bzw. US-PS 3 294 725 bekannten, längere Kohlenwasserstoffreste mit ca. 12 bis 24 C-Atome enthaltende quarternäre Ammoniumhydroxide oder Sulfonsäuren wie z.B. Dodecyl-trimethylammoniumhydroxid, das Dioctadecyl-dimethyl-ammoniumhydroxid oder Dodecylbenzolsulfonsäure zu nennen. Diese Aequilibrierungskatalysatoren wirken gleichzeitig auch als Emulgatoren. Da allerdings der Emulgatorbedarf in der Regel höher ist als derjenige an Katalysator, werden häufig auch Gemische der freien Säuren oder Basen mit ihren entsprechenden, wasserlöslichen Salzen eingesetzt.

Der Hauptanteil der im Latex enthaltenen Polyorganosiloxane wird von 80 bis 99, vorzugsweise 90 bis 97 Mol-%, durch Dialkylsiloxan-, vorzugsweise Dimethyl-Einheiten gebildet. Als Mercaptogruppen enthaltende Organosiloxan-Einheiten der obengenannten Struktur

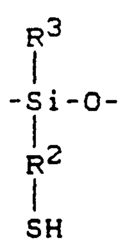

sind solche, welche für $R^2$ zweiwertige 1 bis 8 C-Atome enthaltende Alkylgruppen mit oder ohne Verzweigungen und für $R^3$ Alkylreste mit 1 bis 24 C-Atome oder Arylreste enthalten können. Als solche Siloxan-Einheiten sind zu nennen, z.B. 2-Mercaptoethyl-methyl-siloxan, 3-Mercaptopropyl-methyl-siloxan, 3-Mercaptohexyl-methyl-siloxan und 3-Mercaptopropyl-phenyl-siloxan. Als Organosiloxan-Einheiten in denen $R^2$ und $R^3$ zusammen mit dem Silicium-Atom einen 5 oder 6-gliedrigen Ring mit einem dreiwertigen, unverzweigten oder verzweigten Alkylrest mit 4 bis 8 C-Atome bilden sind z.B. solche mit den nachfolgenden Strukturen zu nennen:

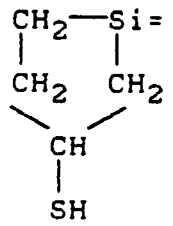

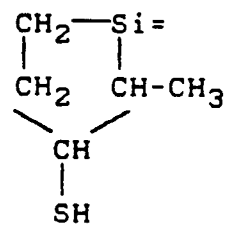

Zu einem geringen Anteil 0,1 bis 5 Mol-% können die Polyorganosiloxane auch Siloxan-Einheiten mit $HSR^2SiR^1O_{3/2}$ bzw. $HSR^2SiR^1O_{1/2}$ enthalten. Höhere Anteile der ersteren ergeben zu stark vernetzte Latexteilchen, die letzteren wirken dagegen in größeren Mengen zu stark regelnd. Es können auch Gemische aus den obengenannten Mercaptoalkyl-alkyl-siloxan-Einheiten eingeführt werden.

Bei der Herstellung der Latices wird entweder der Emulgator unter Rühren ins Organosiloxangemisch hineingemischt und dann unter Rühren das Wasser zugefügt, oder umgekehrt der Emulgator in Wasser gelöst und das Organosiloxan-Gemisch unter kräftigem Rühren langsam zugefügt. In beiden Fällen ist ein kräftiges Rühren und zweckmäßigerweise auch eine unter sehr hohen Scherkräften durchgeführte Emulgierung unter Einsatz eines Homogenisators erforderlich.

Das Verhältnis der wässerigen zu organischen Phase ist nicht kritisch, es sollte jedoch zweckmässigerweise im Bereich des Gewichtsverhältnisses der beiden Komponenten von 4:1 bis 1:2, vorzugsweise bei 2:1 bis 1:1 liegen.

Die Aequilibrierung wird in der Regel drucklos ausgeführt, insbesondere in Gegenwart von leichtflüchtigen Bestandteilen wird jedoch vorteilhaft in geschlossenen Reaktoren unter Eigendruck des Gemisches oder unter erhöhtem Druck aequilibriert.

Die Temperatur bei der Aequilibrierung wird bei ca. 60 bis 100, vorzugsweise bei 70 bis 80 °C gehalten. Auch höhere Temperaturen bis zu ca. 200 °C sind möglich, jedoch weniger vorteilhaft, da das durchschnittliche Molekulargewicht des Polyorganosiloxans von der Aequilibrierungstemperatur sehr stark abhängig ist. Die höchsten Molekulargewichte können bei niedrigen Temperaturen von ca. 20 bis 50 °C erzielt werden. Es ist allerdings dabei zu bedenken, daß unter solchen Bedingungen die Reaktionsgeschwindigkeit sehr niedrig ist und daher für die Erzielung eines weitgehenden Umsatzes sehr lange Reaktionszeiten erforderlich sind. Bei Temperaturen um 70 bis 80 °C genügen dazu in der Regel ca. 5 bis 12 Stunden.

Nach Beendigung der Aequilibrierungsreaktion wird der Latex durch Zugabe von Alkalilaugen oder Ammoniak bei der sauer durchgeführten Katylyse oder von Salzsäure oder Essigsäure im Falle einer alkalisch katalysierten Aequilibrierung möglichst genau auf den pH-Wert von 7 eingestellt.

Bei der Bestimmung des durchschnittlichen Molekulargewichtes anhand von Viskositätsbestimmungen ist zu beachten, daß die Mercaptogruppen enthaltenden Polyorganosiloxane in Gegenwart von Luft zum Vernetzen neigen. Demzufolge muß sowohl die Aequilibrierung als auch die Isolierung des Produktes unter absoluten Luftausschluß erfolgen. Angesichts dieses Verhaltens wird in der Regel auf die Durchführung von Viskositätsmessungen verzichtet.

Das Aufpfropfen von Vinylmonomeren kann direkt nach der Neutralisierung des Polyorganosiloxan-Latex im gleichen Reaktor durchgeführt werden. Sollen allerdings die in der Regel nur einige Gew.-% der eingesetzten cyclischen Polysiloxane vor dem Pfropfen entfernt werden, so wird in dieser Phase eine Wasserdampfdestillation unter etwas vermindertem Druck durchgeführt. Die im Polyorganosiloxan enthaltene Emulgatormenge reicht in der Regel auch für die Pfropfreaktion aus, in einigen Fällen könnte jedoch das Nachsetzen von geringen Emulgatormengen erforderlich werden, dies hängt von der Art und der Menge des aufzupfropfenden Vinylmonomeren ab. In einigen Fällen kann die Ergänzung der von der Aequilibrierung her vorliegenden anionischen oder kationischen Emulgatoren durch nichtionische Emulgatoren vorteilhaft sein.

Die jeweilige Zusammensetzung des aufzupfropfenden Monomergemisches innerhalb der beanspruchten Grenzen ist von den vom Fall zu Fall verschieden, gestellten Anforderungen des Anwendungsgebietes abhängig. Steht außer den in der Regel immer gewünschten guten gummitechnischen Eigenschaften eine gute Hitzestabilität im Vordergrund, so sind die Pfropfcopolymere des Styrols eventuell unter Zusatz eines geringen Anteiles von Acrylaten, wie z.B. von Ethyl-, n-Butyl- oder 2-Ethyl-hexylacrylat oder von Methacrylaten von aliphatischen Alkoholen mit 1 bis 18 C-Atomen einzusetzen. Zwecks Einführung weiterer Vernetzungsreaktionen zugänglichen reaktiven Gruppen, können in kleinen Mengen einige andere Vinylmonomere wie z.B. Acrylsäure, Methacrylsäure, Acrylamid, Methacrylamid, 2-Hydroxypropylacrylat, 2-Hydroxyethylmethacrylat u.a. mit einpolymerisiert werden. Methylmethacrylat wird bevorzugt in Kombination mit Styrol und/oder anderen Alkylacrylaten eingesetzt. Steht beim im Betracht kommenden Anwendungsgebiet die Lösungsmittelbeständigkeit bzw. Ölbeständigkeit mehr im Vordergrund, so sind Pfropfcopolymere mit höherem Gehalt an aufgepfropften Acrylnitril zu erstreben. Das Acrylnitril verleiht dem Pfropfcopolymeren, ähnlich wie das Styrol und in etwa geringerem Umfang das Methylmethacrylat nach dem Ausvulkanisieren eine recht hohe Zugfestigkeit. Andererseits gelingt es jedoch nicht ohne weiteres, das Acrylnitril als einziges Vinylmonomere auf die Polyorganosiloxan-Latices auf zupfropfen. Vorzugsweise sollte in diesen Fällen das Vinylmonomergemisch mindestens 25 bis 30 Gew.-% Styrol und/oder eines Acryl- oder Methacrylesters enthalten.

Die Pfropfreaktion kann nach verschiedenen, bei der Emulsionspolymerisation üblichen Verfahren, so z.B. nach dem sog. Batch-Verfahren oder nach den verschiedenen Zulaufverfahren durchgeführt werden. Beim wegen der einfachen Durchführung häufig bevorzugten Batch-Verfahren wird der Polyorganosiloxan-Latex vorgelegt und bei einer Temperatur, bei welcher noch keine Polymerisation stattfindet, d.h. bei Temperaturen zwischen 0 bis 50 °C, bevorzugt von 10 bis 30 °C, das Monomergemisch, eventuell zusammen mit einem darin löslichen Polymerisationsinitiator oder mit einem Gemisch verschiedener Polymerisationsinitiatoren unterschiedlicher Zersetzungstemperaturen, unter gutem Rühren im Laufe von ca. 1 Stunde zugegeben. Um den Monomergemisch Gelegenheit und Zeit zu geben in die Polysiloxan-Latexteilchen einzudringen und sich darin zu verteilen, wird das Gemisch dann noch bis maximal 18 Stunden bei dieser Temperatur gerührt. Nach dieser Anquellzeit wird dann die Polymerisation durch eine stufenweise Erhöhung der Temperatur gestartet und zu Ende geführt. Diese Arbeitsweise ist allerdings in Anbetracht des mitunter sehr heftigen, exothermen Polymerisationsverlaufes nicht immer praktikabel. Das Verfahren läßt sich dahingehend modifizieren, daß der in der Kälte wie oben beschrieben vorbehandelte, relativ konzentrierte Latex bei einer der Zersetzungstemperatur des eingesetzten Polymerisationssinitiators angepaßten Temperatur mit einer derartigen Geschwindigkeit zu einer geringen Menge vorgelegten Emulgatorlösung zugefügt wird, daß dabei die entstehende Polymerisationswärme abgeführt werden kann.

Ein weiteres Alternativverfahren ist in diesem Fall das langsame Zudosieren eines wasserlöslichen Polymerisationsinitiators wie z.B. von Kaliumperoxydisulfat oder eines Redoxinitiators zum vorgelegten Latex bei einer dem Zersetzungspunkt des Initiators angepaßten Temperatur.

Selbstverständlich kann man auch auf die oben geschilderte Vorquellung der Polyorganosiloxan-Latexteilchen verzichten, und zum vorgelegten Latex bei der Polymerisationstemperatur gleichzeitig das Monomergemisch und der Initiator zudosieren ode den Prozeß kontinierlich fahren.

Die nicht polymerisierten Monomeranteile können, falls erforderlich, durch eine unter vermindertem Druck durchgeführte Wasserdampfdestillation entfernt werden.

Die radikalische Polymerisation der Vinylmonomeren kann in bekannter Weise unter Zusatz von Radikalbildnern, UV-Strahlen, $\alpha$-, $\beta$- oder $\gamma$-Strahlen oder thermisch ohne weitere Zusätze gestartet werden Um die Polymerisation von Vinylmonomeren unter Zusatz der bevorzugt eingesetzten Radikalbildnern zu starten, werden diese in Mengen zwischen 0,001 bis 10, vorzugsweise 0,1 bis 1,5 Gew.-% bezogen auf die Gesamtmischung aus Polyorganosiloxanen und Vinylmonomeren eingesetzt. Als Radikalbildner seien beispielhaft aufgeführt Azo-Initiatoren wie Azo-bis-isobuttersäurenitril (AIBN), Azoester, Azoaminoester oder Azo-N-alkylamide; Peroxide wie Dibenzoylperoxid, Dilauroylperoxid, Di-tert.-butylperoxid, 2,4-Dichlorbenzoylperoxid; Peroxyester wie Butylperpivalat, tert.-Butylperoctoat, tert Butylperbenzoat, tert. Butylperneodecanoat; Percarbonate wie Cyclohexylpercarbonat, Bis-isopropylpercarbonat oder Hydroperoxide wie tert.-Hydroperoxid bzw. Cumylhydroperoxid.

Die Polymerisation kann auch in Gegenwart von thermisch labilen hochsubstituierten Ethanderivaten wie z.B. Benzpinakol und seiner Derivate gestartet werden.

Eine weitere Möglichkeit zum Starten der Polymerisation ist der Einsatz von Redoxinitiatorsystemen, welche bei wesentlich niedrigeren Temperaturen als die rein thermisch zerfallenden Radikalbildner eingesetzt werden können. Als Redox-Initiatoren seien beispielhaft genannt die Kombinationen aus Peroxiden und Aminen, wie z.B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen sowie Schwefeldioxid/Peroxid-Redoxsysteme.

Die Pfropfcopolymerisation kann kontinuierlich oder diskontinuierlich, drucklos oder bei Drucken bis 200 bar, bei Reaktionstemperatur zwischen 0 bis 200 °C, vorzugsweise 20 bis 150 °C, durchgeführt werden.

Falls erwünscht, kann die Polymerisationsreaktion in Gegenwart von Molekulargewichtsreglern durchgeführt werden, allerdings ist ihr Einsatz angesichts der regelnden Wirkung der im Polyorganosiloxan bereits vorhandenen Mercaptogruppen in den meisten Fällen nicht erforderlich. Geeignete Regler sind beispielhaft in der EP-PS-0 084 321 auf den Seiten 10 bis 12 aufgeführt.

Anwendungsgebiete der erfindungsgemäßen Latices sind vor allem solche, wo hohe Ansprüche an die Resistenz gegen polare Lösungsmittel, gegen extreme Hitzebelastung (gute Hitzestandfestigkeit) und gegen extrem niedrige Temperaturbelastung (Erhaltung der Flexibilität des Polymerfilmes bei besonders niedrigen

Temperaturen) verlangt werden. Beispiele für derartige Artikel sind: Technische Artikel (Schläuche, Manschetten, Dichtungen, Handschuhe), Zylinderkopfdichtungen und Filtermaterialien (Flächengebilde aus verbundenen anorganischen oder organischen Fasern).

Der Gegenstand der Erfindung soll anhand der folgenden Beispiele näher erläutert werden.

## Beispiel 1

I) In einem 6 Litern fassenden, mit einem intensiv wirkenden, mit zwei 10 mm Dissolverscheiben ausgerüsteten Dispergiergefäß werden 1.550 Octamethylcyclotetrasiloxan vorgelegt und unter Rühren bei 1.000 U/min zunächst 180 g Mercaptopropyl-methyldimethoxysilan und dann 38 g Dodecylbenzolsulfonsäure zugegeben. Nach 5 Minuten Rühren entsteht ein homogenes Gemisch. Es werden dann unter Rühren im Laufe von 20 Minuten 2.300 g entionisiertes Wasser zulaufen gelassen und 1 Stunde bei Raumtemperatur nachgerührt. Die entstandene Emulsion wurde dann mit Hilfe einer Gaulinmaschine 12 Minuten bei 200 bar homogenisiert.

Die homogene Emulsion wird dann in einen 4 Liter fassenden, mit einem Butterflyrührer ausgerüsteten Sulfierbecher umgefüllt und unter Rühren mit 170 U/min 2,5 Stunden auf 85 °C erwärmt. Nach dem Abkühlen auf Raumtemperatur wird der Latex durch Zugabe von 23,9 g 5n Natronlauge auf einen pH-Wert von 9,25 eingestellt. Es wurde eine milchig weiße Emulsion mit einem Gehalt von 38,1 Gew.-% an unflüchtigen Bestandteilen erhalten. Dies entspricht einem Polymerisationsumsatz von ca. 90 Gew.-%.

Die durch die Laserstreulichtmethode ermittelte durchschnittliche Teilchengröße betrug 200 nm bei einer geringen Verteilungsbreite (K2-Wert) von 0,034. Die Gelgehaltsbestimmung ergab ca. 48,5 Gew.-%. Der Quellindex lag bei ca. 48 Gew-%. Der Latex enthält 1,0 Gew.-% Natrium-dodecylbenzolsulfonat als Emulgator.

II) In ein 2 Liter fassendes, mit einem Flügelrührer ausgerüstetes, gläsernes Rührgefäß werden 485 g des obigen Polyorganosiloxan-Latex vorgelegt, unter Rühren mit 200 U/min mit 233 g entionisiertem Wasser verdünnt und die Luft aus dem Reaktor durch Einleiten von Stickstoff verdrängt. Es wird unter Rühren im Laufe von 1 Stunde eine Lösung von 1,8 g Azo-bis-isobuttersäurenitril in 180 g Styrol gelöst zugetropft, das Gemisch 18 Stunden bei Raumtemperatur gerührt und dann in stündlichen Abständen die Temperatur des Latex auf 60, 70 und 80 °C erhöht. Zum Schluß wird der Latex 4 Stunden auf 90 °C erhitzt und unter Rühren abgekühlt. Es wird ein viskoser Latex mit einem Gehalt von 40,9 Gew.-% an nichtflüchtigen Anteilen und mit einem pH-Wert von 5,71 erhalten. Aus dem Latex lassen sich durchscheinende, weiche und etwas klebrige Filme mit etwas matter aber glatter Oberfläche gießen, welche nach einem 20-minütigem Erhitzen auf ca. 160 °C klebfreie Filme mit recht guter Zugfestigkeit und mit gummielastischen Eigenschaft ergaben.

## Beispiel 2

1.635 g eines wie im Beispiel 1 beschriebenen hergestellten Polyorganosiloxan Latex mit einem Gehalt von 37,7 Gew.-% an unflüchtigen Anteilen, werden in einem 4 Liter fassenden, mit einem Flügelrührer ausgerüsteten Glasgefäß vorgelegt. Der Latex enthält 600 g Polyorganosiloxan mit einem ca. 2 Gew.-% betragenden Mercaptogruppengehalt und 16,2 g Natrium-dodecylbenzolsolfonat als Emulgator. Nach dem Verdünnen mit 641 g entionisiertem Wasser werden im Laufe von 1 Stunde ein Gemisch aus 400 g Styrol, 20 g Methacrylsäure und 4 g Azo-bis-isobuttersäurenitril mit gleichmäßiger Geschwindigkeit zugepumpt und der Latex 18 Stunden bei Raumtemperatur gerührt. Die Polymerisation wird dann unter in einstündigen Abständen erfolgendes Erhöhen der Temperatur auf 60, 70 und 80 °C und vierstündigem Erhitzen auf 90 °C zu Ende geführt.

Nach dem Abkühlen auf Raumtemperatur erhält man einen mittelviskosen Latex mit einem Gehalt von 39,5 Gew.-% an unflüchtigen Anteilen. Der pH-Wert des Latex lag bei 5,41. Der aus dem Latex gegossene Film ist nach 20 Minuten Erhitzen im Trockenschrank auf ca. 160 °C reißfest, durchscheinend und zeigt gute gummielastische Eigenschaften.

## Beispiel 3

In einen Rundkolben von 500 ml Fassungsvermögen werden 162 g eines nach dem Beispiel 1 hergestellten, ca. 2 Gew.-% Mercaptogruppen enthaltenden Polyorganosiloxan, Latex mit einem Gehalt von 38,0 Gew.-% an unflüchtigen Bestandteilen vorgelegt, mit 78 g Wasser verdünnt und im Laufe von einer Stunde bei Raumtemperatur unter Rühren wird ein Gemisch aus 30 g Acrylnitril, 20 g Ethylacrylat und 0,4 g Azo-bis-buttersäurenitril mit gleichmäßiger Geschwindigkeit zugetropft. Die Polymerisation wird nach zehn-

ständigem Verweilen des gerührten Latex bei RT durch stufenweise, in zweistündigen Abständen erfolgte Erhöhung der Temperatur auf 60 bzw. 70 °C und durch ein vierstündiges Nacherhitzen auf 80 °C zu Ende geführt.

Es wird ein ausfallfreier Latex mit einem Feststoffgehalt von 37,5 Gew.-% erhalten. Zwecks Entfernung der Monmomerreste wird der Latex mit 250 ml Wasser verdünnt und etwa genausoviel Destillat bei ca. 50 °C unter vermindertem Druck abdestilliert. Aus dem 39,3 Gew.-% unflüchtigem Material enthaltenden Latex können gleichmäßige, durchscheinende Filme mit glatter jedoch etwas matter Oberfläche gegossen werden. Nach einem 20minütigem Erhitzen auf ca. 160 °C erhält man ein erheblich verfestigtes Material, dessen gummmielastischen Eigenschaften aufgrund ihres relativ hohen Gehaltes an Acrylnitril nur wenig ausgeprägt sind. Die Filme zeigen eine gute Beständigkeit gegen Kohlenwasserstofe und Mineralöl. Sie zeigen auch eine aufgrund ihres Acrylnitrilgehaltes stark verminderte Quellung in verschiedenen organischen Lösungsmitteln wie z.B. in Perchlorethylen oder Trichlorethylen.

Beispiel 4

Das Beispiel 3 wird wiederholt mit dem Unterschied, daß statt des dort angegebenen Vinylmonomergemisches ein solches aus 25 g Acrylnitril, 15 g Ethylacrylat und 0,4 g Azo-bis-isobutyronitril dem vorgelegten Latex zugetropft wird.

Der aus dem Latex gegossene Film ist nur schwach getrübt, glatt und kaum klebrig. Nach dem Erhitzen auf ca. 160 °C tritt eine bemerkenswerte Verfestigung ein. Das gummielastische Verhalten des Produktes ist noch günstiger, als dies beim Beispiel 3 der Fall war.

Beispiel 5

Aus der unter Beispiel 5 beschriebenen Polymerdispersion 3 (3739 M) und einem bekannten Vergleichslatex 1 mit guter Lösungsmittelbeständigkeit (Polymerzusammensetzung: 54 % Butadien, 41 % Acrylnitril, 5 % Methacrylsäure) werden durch Ausgießen auf einer Glasplatte und Lufttrocknen bei Raumtemperatur Filme von ca. 1 mm Dicke hergestellt. Nach 10 minütigem Heizen ber 150 °C werden aus den Filmen kreisrunde Probekörper mit einem Durchmesser von 20 mm zur Bestimmung der Lösungsmittelresistenz hergestellt. Nach Lagerung in Toluol und Trichlorethylen erhält man folgende Volumenzunahmen (in Prozenten):

| Polymerdispersion | | | |
|---|---|---|---|
| Beispiel 3: | 1 h | 106 | 130 |
| | 8 h | 108 | 140 |
| | 48 h | 130 | 155 |
| Vergleichslatex: | 1 h | 361 | 163 |
| | 8 h | zerfallen | zerfallen |
| | 48 h | zerfallen | zerfallen |

Beispiel 6

Aus folgenden Dispersionen werden Filme nach der Anwendungsbeispiele 5 beschriebenen Methode hergestellt:

a) Polymerdispersion 1 (Beispiel 1)
b) Polymerdispersion 2 (Beispiel 2)
c) Vergleichsdispersion 2 (Polymerzusammensetzung: 72 % Butadien, 28 % Acrylnitril)
d) Vergleichsdispersion 3 (Polymerzusammensetzung: 76 % Butadien, 24 % Styrol)
e) Vergleichsdispersion 4 (Polymerzusammensetzung: 100 % 2-Chlor-butadien-1,3)

Testproben dieser fünf Filme (10x60x1 mm) werden 3 Stunden lang bei -70 °C gelagert, bei diesen Temperaturen werden nun die Längsenden der Filme um 180° gegeneinander gebogen. Die Filme a) und b) bestehen die Behandlung ohne sichtbare Beschädigung; die Filme c) und e) brechen unter diesen Testbedingungen.

Beispiel 7

Filme der Polymerdispersionen 1, 2 und 3, sowie einer herkömmlichen Polyacrylester-Dispersion (Vergleichslatex 5: Polymerzusammensetzung: 77,5 % Ethylenacrylat: 22,5 % Acrylnitril und 3 % Acrylamid) werden bei 200 °C über einen Zeitraum von 72 Stunden in Heißluft gealtert. Von den Filmen wird Zugfestigkeit und Bruchdehnung (DIN 53 504 - Testproben S III) vor und nach der Alterung bestimmt:

| | | Zugfähigkeit [MPa] | Bruchdehnung [%] |
|---|---|---|---|
| Polymerdispersion 1 | 0<br>72 h | 5,2<br>1,6 | 330<br>60 |
| Polymerdispersion 2 | 0<br>72 h | 5,5<br>2,1 | 440<br>45 |
| Polymerdispersion 3 | 0<br>72 h | 7,0<br>6,2 | 170<br>50 |
| Vergleichslatex | 0<br>72 h | 10,5<br>verhärtet | 300 |

**Patentansprüche**

**1.** Polysiloxanzusammensetzung, bestehend im wesentlichen aus Pfropfcopolymer-Latices von Vinylmonomeren auf Polyorganosiloxanen, die im Pfropfcopolymer in eingebautem Zustand enthalten:

1. als Pfropfsubstrat 40 bis 70 Gew.-%, vorzugsweise 50 bis 65 Gew.-%, eines mit Hydroxylgruppen endgestoppten Polyorganosiloxans der allgemeinen Formel

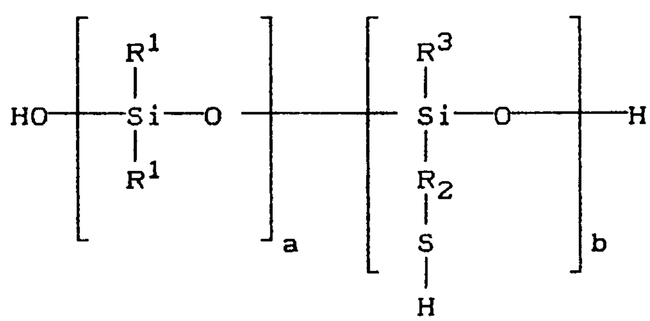

wobei

| | |
|---|---|
| $R^1$ | Alkylreste mit 1 bis 24 C-Atomen oder Arylreste mit 6 bis 10 C-Atomen, |
| $R^2$ | unverzweigte oder verzweigte zweiwertige Alkylreste mit 1 bis 8 C-Atomen, |
| $R^3$ | Alkylreste mit 1 bis 24 C-Atomen oder Arylreste bedeutet, |
| $R^2$ und $R^3$ | zusammen mit dem Silicon-Atom einen 5- oder 6-gliedrigen Ring mit einem dreiwertigen unverzweigten oder verzweigten Alkylrest mit 4 bis 8 C-Atomen bilden können und |
| a | 80 bis 99 Mol-%, vorzugsweise 90 bis 97 Mol-%, |
| b | 1 bis 20 Mol-%, vorzugsweise 3 bis 10 Mol-% |

beträgt, wobei

a + b 100 Mol-% ergibt,

und die bei 25 °C gemessene Viskosität des Polymers zwischen 100 und 100.000 mPa.s liegt,

2. als aufgepropftes Vinylpolymer 30 bis 60 Gew.-%, vorzugsweise 35 bis 50 Gew.-%, Styrol und/oder α-Methylstyrol, (Meth)Acrylsäureester, (Meth)Acrylnitril bzw. Gemische dieser Monomeren, und gegebenenfalls ein oder mehrere Vinylmonomere der allgemeinen Formel

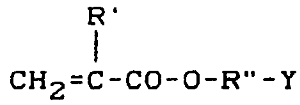 oder 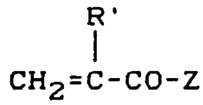

wobei

R' für ein H-Atom oder für eine Methylgruppe,

R'' für eine zweiwertige unverzweigte oder verzweigte Alkylgruppe mit 1 bis 18 C-Atomen,

Y für ein H-Atom oder für die Gruppen -OH, -OR und

Z für eine OH- oder

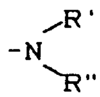 oder 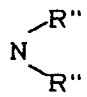 -Gruppe

steht.

**2.** Verwendung der Polysiloxanzusammensetzungen gemäß Anspruch 1 als Bindemittel für textile Gebilde.

**Claims**

**1.** A polysiloxane composition consisting essentially of graft copolymer latices of vinyl monomers on polyorganosiloxanes containing - incorporated in the graft copolymer -

1. as the graft substrate from 40 to 70% by weight and preferably from 50 to 65% by weight of a hydroxylterminated polyorganosiloxane corresponding to the following general formula:

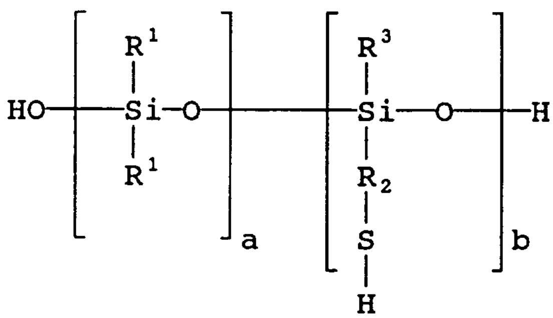

in which

| | |
|---|---|
| $R^1$ | represents $C_{1-24}$ alkyl radicals or $C_{6-10}$ aryl radicals, |
| $R^2$ | represents unbranched or branched difunctional $C_{1-8}$ alkyl radicals, |
| $R^3$ | represents $C_{1-24}$ alkyl radicals or aryl radicals |
| $R^2$ and $R^3$ | together with the silicon atom may form a 5- or 6-membered ring containing a trifunctional, unbranched or branched $C_{4-8}$ alkyl radical and |
| a | = 80 to 99 mol-% and preferably 90 to 97 mol-%, |
| b | = 1 to 20 mol-% and preferably 3 to 10 mol-%, |
| a + b | = 100 mol-%, |

the viscosity of the polymer as measured at 25 °C being in the range from 100 to 100,000 mPa.s,

2. as the grafted-on vinyl polymer from 30 to 60% by weight and preferably from 35 to 50% by weight of styrene and/or α-methyl styrene, (meth)acrylate, (meth)acrylonitrile or mixtures of these monomers and optionally one or more vinyl monomers corresponding to the following general formula:

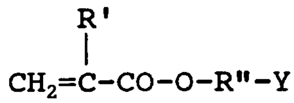 or 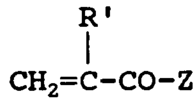

in which

- R' is a hydrogen atom or a methyl group,
- R'' is a difunctional, unbranched or branched $C_{1-18}$ alkyl group,
- Y is a hydrogen atom or represents the groups -OH, -OR and
- Z is an OH or

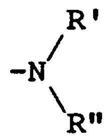 or 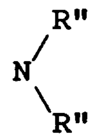

group.

**2.** The use of the polysiloxane compositions claimed in claim 1 as binders for textile materials.

## Revendications

**1.** Composition à base de polysiloxane, principalement constituée de latex de copolymères de greffage de monomères vinyliques sur des polyorganosiloxanes, qui contiennent dans le copolymère greffé, à l'état incorporé :

1. comme substrat de greffage, 40 à 70 % en poids, de préférence 50 à 65 % en poids, d'un polyorganosiloxane à chaîne terminée par des groupes hydroxyle, de formule générale

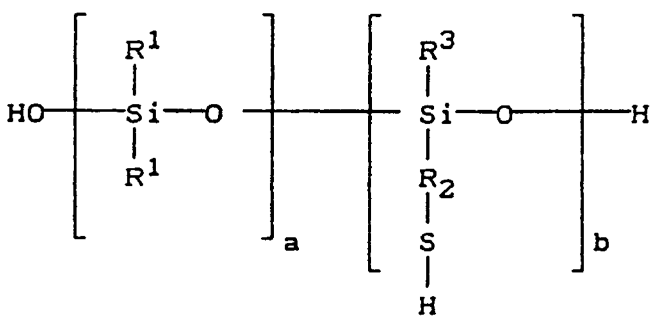

dans laquelle

- $R^1$ désigne des restes alkyle ayant 1 à 24 atomes de carbone ou des restes aryle ayant 6 à 10 atomes de carbone,
- $R^2$ désigne des restes alkyle divalents non ramifiés ou ramifiés ayant 1 à 8 atomes de carbone,
- $R^3$ désigne des restes alkyle ayant 1 à 24 atomes de carbone ou des restes aryle,
- $R^2$ et $R^3$ peuvent former conjointement avec l'atome de silicium un noyau pentagonal ou hexagonal portant un reste alkyle trivalent non ramifié ou ramifié, ayant 4 à 8 atomes de carbone et
- a a une valeur de 80 à 99 moles %, de préférence de 90 à 97 moles %,
- b a une valeur de 1 à 20 moles %, de préférence de 3 à 10 moles %,

la somme a + b étant égale à 100 moles %,
et la viscosité du polymère, mesurée à 25 ° C, se situe entre 100 et 100 000 mPa.s,

2. comme polymère vinylique fixé par greffage, 30 à 60 % en poids, de préférence 35 à 50 % en poids, de styrène et/ou d'α-méthylstyrène, d'ester d'acide (méth)acrylique, de (méth)acrylonitrile ou de mélanges de ces monomères, et le cas échéant, un ou plusieurs monomères vinyliques de

formule générale

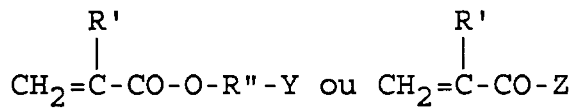

dans laquelle

- R' représente un atome d'hydrogène ou un groupe méthyle,
- R'' est un groupe alkyle divalent non ramifié ou ramifié ayant 1 à 18 atomes de carbone,
- Y est un atome d'hydrogène ou représente les groupes -OH, -OR et
- Z est un groupe -OH ou

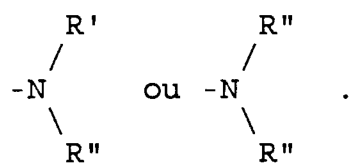

**2.** Utilisation de compositions à base de polysiloxane suivant la revendication 1 comme liants pour corps textiles.